# EUROPEAN PATENT APPLICATION

(11) **EP 4 588 638 A1**
(43) Date of publication of application: **23.07.2025**
(21) Application number: 24305107.5
(22) Date of filing: 17.01.2024
(51) Int. Cl.: B28B 19/00, C04B 28/14, C04B 38/10, E04C 2/04, C04B 111/00, C04B 111/52

(54) **GYPSUM BOARD WITH SOUND ABSORPTION PROPERTIES AND MANUFACTURE THEREOF**

(71) Applicant: SAINT-GOBAIN PLACO, 92400 Courbevoie (FR)
(72) Inventor: CEDANO SERRANO, Francisco Javier, 93300 AUBERVILLIERS (FR); GIRARD, Jaona, 93300 AUBERVILLIERS (FR)
(74) Representative: Saint-Gobain Recherche

(57) **Abstract**

A gypsum board comprising a gypsum core disposed between two cover sheets; wherein said gypsum core comprises a gypsum crystal matrix and air pores; wherein at least 80%, preferably at least 90%, of air pores are connected, either by a throat or a hole, wherein the average neighbourhood coordination of said connected air pores is between 2 and 10, preferably between 4 and 8, and wherein the distribution of the air pores diameter is multimodal. The porosity allows the gypsum board to exhibit enhanced acoustic damping properties.

## Description

### Technical field

The invention pertains to a gypsum board and a process for manufacturing thereof.

### Technical background

Gypsum boards, for wall and ceiling systems, are well-known applications of gypsum, calcium sulphate dihydrate CaSO₄ 2(H₂O). They are made of a gypsum core sandwiched between two cover sheets which are usually paper based sheets. The base material from which gypsum crystal matrix of the gypsum core is made is calcium sulphate hemihydrate CaSO₄ 0.5(H₂O), also named 'stucco', which is produced by dehydration or calcination of gypsum CaSO₄ 2(H₂O) to remove 1,5 molecules of water.

Calcium sulphate hemihydrate occurs in two forms: alpha calcium sulphate hemihydrate (α-hemihydrate) produced from gypsum calcined in a steam-saturated atmosphere, and beta-calcium sulphate hemihydrate (β-hemihydrate) produced under conditions where the partial pressure of water vapour is low. Both alpha and beta calcium sulphate hemihydrates can be used to manufacture gypsum boards. Porosity is introduced into the gypsum matrix essentially to reduce the weight of the gypsum board or sometimes to improve its acoustic absorption, and less importantly to reduce the generation of dust during mechanical processing, e.g., cutting, nailing screwing. Ideally, the porosity must not hinder its mechanical strength.

Porosity is often essentially produced by air pores. Air pores are generally spherical in shape, separated to each other and not linked to each other in a continuous network.

In the gypsum process, substantial amounts of water are consumed to form gypsum slurries. Most of this water is removed by drying. A drying process is expensive since it requires large amounts of energy to make water evaporate. It is also time-consuming as the migration of water through the slurry to reach the surface requires some time.

WO 2008063295 A2 [UNITED STATES GYPSUM CO [US]] 29.05.2008 describes a gypsum board with a total porosity from about 80% to 92%, water pores with a size less than 5 µm in diameter and air pores with a specific size distribution which allows reduction of dust generation during mechanical processing, e.g., cutting, nailing screwing, of the gypsum board... The gypsum board is manufactured with gypsum slurry having a high water-to-stucco ratio (WSR), typically more than 0.7. WO 2009074875 A1 [LAFARGES PLATRES [FR]] 18.06.2009 describes a sound-absorbing and mechanically resistant gypsum board comprising a porous gypsum core with a high tortuosity, thus a relatively low porous gypsum core with low connectivity between air pores. Reducing the connectivity, i.e., reducing the percolation rate, of air pores allows improvement of the mechanical resistance. The gypsum board is preferably manufactured with a gypsum slurry having a water-to-stucco ratio (WSR) between 0.45 and 0.75.

WO 2022153181 A1 [KNAUF GIPS KG [DE] 31.07.2022 describes a soundproofing panel comprising an open-cell gypsum core consisting of an entangled gypsum matrix with air pores interconnected by open channels. The channels are distributed throughout the entangled matrix and form complex, tortuous, labyrinth-like paths through the structure for acoustic waves to penetrate, travel through and be absorbed. The neighborhood coordination of the connected air pores in the final structure (coordination number) of the order of 1, as can be seen in figure 1 of this publication.

### Summary of the invention

### Technical problem

The main problem solved by the present invention is to provide gypsum board with improved sound absorption features (i.e. anti-reverberant properties), thanks to an adapted open porous internal structure that favours such acoustic properties. Also, preferably, the aim of the instant invention is to provide a gypsum board with reduced weight together with said improved acoustic properties but without decreasing dramatically the mechanical resistance of the board.

In a first aspect of the disclosure, there is provided a gypsum board comprising a gypsum core disposed between two cover sheets; wherein said gypsum core comprises a gypsum crystal matrix and air pores; wherein at least 80%, preferably at least 90%, of air pores are connected, either by a throat or a hole, wherein the average neighbourhood coordination of said connected air pores is between 2 and 10, preferably between 4 and 8 and wherein the distribution of the air pores diameter is multimodal.

According to preferred embodiments of the invention, which can be combined with each other:
- The distribution of the air pores diameter is bimodal.
- The distribution by number of the air pores diameter comprises at least a first peak whose maximum lies within a pore diameter range of between 1 and 80 micrometers and a second peak whose maximum lies within a pore diameter range higher than 100 micrometers and preferably comprising only these two peaks.
- The average pore equivalent diameter, as a function of the cumulative air volume fraction, is higher than 200 nm and lower than 500 nm.
- The cumulated volume proportion of the connected air pores is more than 40% and less than 65%, preferably less than 60%, of the overall gypsum core volume.
- The larger air pores are connected by the smaller air pores through said throat or hole.
- The core further comprises reinforcing fibers throughout the gypsum crystal matrix.

In a second aspect of the invention, there is provided a process to manufacture a gypsum board as described above, said process comprising the following steps:
- forming a gypsum slurry of alpha-gypsum hemihydrate or beta-gypsum hemihydrate by mixing said gypsum slurry with water and additives, said additives comprising a mixture of plasticizers, a retarder, starch;
- blending of the slurry until the gypsum hemihydrate is dispersed,
- producing a foam comprising air, water and a surfactant
- adding the foam to the blended slurry,
- placing the resulting foamed slurry between liners to make said gypsum board wherein the mixture of plasticisers comprises a polynaphtalene sulfonate (PNS) and a polycarboxylate (PCE) in a weight ratio PNS/(PNS+PCE) between comprised between 0.2 and 0.3.

According to preferred embodiments of said process :
- The surfactant is chosen from alkyl sulfate (AS), alkyl ether sulfate (AES) and their mixture.
- The density of the foam is between 80 g/L and 100 g/L.
- The frequency of the foam generator of the foam comprising air, water and a surfactant is from 10 to 50 Hz.
- The water to stucco ratio of the gypsum slurry is between 0,4 and 0,8, preferably between 0,5 and 0,7.
- The additives comprise also a accelerator and/or a retarder.
- The additives are present according to the following amount, the percentage being given by reference to the weight of the gypsum slurry :
   - Surfactant (total amount) : between 0.5 and 1%
   - Plasticizers (total amount) : between 1 and 3%
   - Starch : between 1 and 3%
   - Accelerator between 0 and 2%
   - Retarder : between 0 and 0.1 %

### Advantages of the invention

An outstanding advantage of the present disclosure is to provide a gypsum board with improved acoustic properties preferably without a substantial decreasing of its mechanical strength. This is achieved with a particular design of the network of the air pores in the gypsum matrix of the gypsum core as is reported in the following claims.

### Detailed description of embodiments of the invention

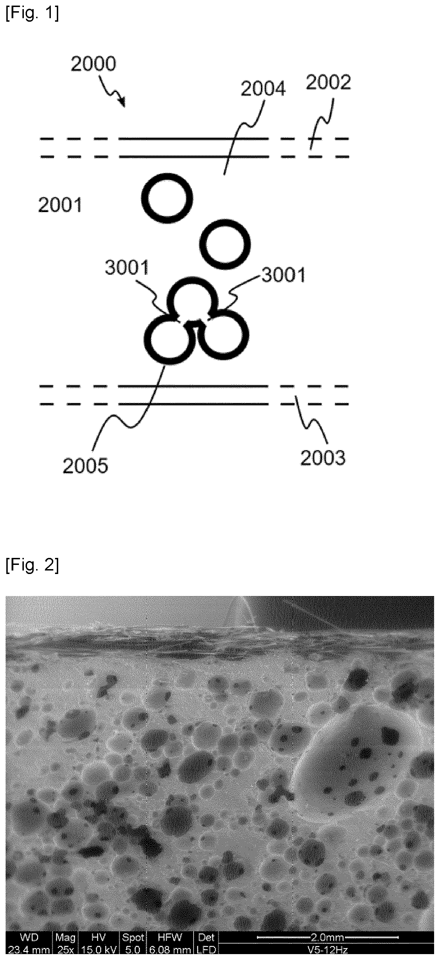

With reference to fig. 1, a gypsum board 2000 according to the invention comprises a gypsum core 2001 sandwiched between two cover sheets 2002, 2003. The gypsum core 2001 comprises a gypsum crystal matrix 2004 mainly made of calcium sulphate hemihydrate CaSO₄ 0.5(H₂O) and air pores 2005. Air pores 2005 are generally spherical in shape, separated to each other and linked to each other to form continuous network. At least 90%, preferably at least 94%, more preferably at least 98% of air pores 2005 are connected by a throat 3001; and wherein the average neighbourhood coordination of said connected air pores 2005 is between 2 and 10, preferably between 4 and 6.

In the context of disclosure, a 'throat' connecting air pores shall be understood as it is currently defined in the technical field, i.e., as an opening through the walls of two adjacent air pores so that to form a communication channel or path or window between them, as is illustrated on fig. 1. The throat can be in a borderline case just a hole between two connected pores.

In the context of the disclosure, a 'neighbourhood coordination' (or number of coordination) of a connected air pore is the number of adjacent neighbour air pores to which it is connected by a throat. The average neighbourhood coordination is the average of neighbourhood coordination measured or calculated for all the connected air pores.

The neighbourhood coordination may be measured by any adapted method, e.g., image processing of SEM micrographs of cross-sections of gypsum core samples and/or image processing of X-ray tomographic 3D images of bulk gypsum core samples. X-ray tomographic based methods may be preferred as it may be more accurate than SEM micrographs-based methods which require more data to be statistically representative of volume samples.

As mentioned before, a gypsum board according to the first aspect of the invention may show improved acoustic properties. Without being bound by any theoretical explanation, it is proposed that an adjusted level of connectivity between the air pores of a gypsum core allows to enhance the acoustic insulation, while also advantageously reducing its weight. It may be considered as an advantageous kind of compromise regarding the porosity to get at once the benefits of acoustic insulation, lightweight, and mechanical strength.

The overall porosity in a plaster board is the sum of three types of porosity:
1- the porosity in between crystals coming from water evaporation which cannot be measured by tomography. This porosity is not useful for acoustic properties because the pores are too small to let soundwaves pass through;
2- the porosity coming from dissolution voids: the voids are left from the biggest stucco grains that get dissolved only after the matrix is set - pores are left after the grains dissolve and the water in the slurry evaporates out of the board. These pores are generally non-spherical and are called dissolution void porosity;
3- the porosity coming from the foaming process according to the invention, called trapped air porosity.

According to the invention, the volume of the (inter)connected pores is only from type 2 and type 3 pores, that is from dissolution voids and trapped air. These pores are usually called air pores and their total volume defines the Air Volume Fraction (AVF) according to the present description. The AVF can be directly measured by tomography.

In preferred embodiments of the invention, the volume of (inter)connected pores represents at least 80% of the Air Volume Fraction of the material, preferably at least 90%, or even more than 95%, 97% or 99% of the AVF.

The density of the gypsum crystal matrix may be measured by any suitable method or apparatus, e.g., hydrostatic balances or gas pycnometers.

The nominal density of gypsum may depend on the amounts of the different gypsum phases and other compounds that form the crystals of the gypsum crystal matrix. For example, when the gypsum crystal is only made of calcium sulphate hemihydrate CaSO₄ 0.5(H₂O), the nominal density of gypsum may be close to the density of calcium sulphate hemihydrate, i.e., 2.73 g/cm³. The density of the gypsum crystal matrix may then be at least 1.50 g/cm³, preferably 1.77 g/cm³, more preferably more than 1.91 g/cm³.

Both alpha and beta calcium sulphate hemihydrates can be used to manufacture gypsum boards according to the invention. Throats may be identified through image processing of 2D SEM micrographs and preferably through X-ray tomographic 3D images. As for neighbourhood coordination, X-ray tomographic based methods may be preferred as it may allow to acquire 3D image which are more representative of volume samples.

Therefore, image processing of X-Ray tomographic 3D images were used by the applicant. 3D images allow to reconstruct the 3D distribution of the air pores in a volume sample. By measuring the distance between the centres of two adjacent air pores and subtracting their respective radii, a distribution of values for the wall thicknesses may be calculated.

Without being limited in any way to any specific range of densities for gypsum board according to the disclosure, it has been found that a gypsum board may show best performances in an optimal range of densities. Accordingly, in certain advantageous embodiments, the density of gypsum board may advantageously be between 5 kg/m² and 15 kg/m², preferably between 5 kg/m² and 10 kg/m²

The amount of total porosity, including air and water pores, directly affects the density of the gypsum core and, thus, the density of the gypsum board. As air pores contributes most to final density of the gypsum core, the total fraction of air pores, either connected or non-connected, may be used as a proxy to qualify the level of lightness of a gypsum board.

Air resistivity measures the ability of fluid, e.g., air, to flow through a material. It may allow to measure the airtightness of a building material and, since it is linked to the open pore network, may be used to characterise said open network. Connected air pores generally contribute the most to the global porosity of gypsum board and the contribution from water pores may be neglected. Air resistivity may then be used as a proxy to characterise the open pore structure formed by connected air pores. Low values of air resistivity correspond therefore to high connectivity between pores.

In a second aspect of the disclosure, there is provided a process for manufacturing a gypsum board according to any of the embodiments of the first aspect of the disclosure, wherein said process comprises the following steps:

### Examples

The features and the benefits are now illustrated with the examples described hereafter.

Four examples E1-E4 of gypsum boards were manufactured following the manufacturing recipes of Table 1 for their gypsum slurries.

Examples E1-E3 are made according to the invention. Example E4 is made according to the prior art.

The initial gypsum slurries of examples E1 to E4 are primarily prepared with beta hemihydrates (HH beta) in water, the Water to Stucco Ratio (WSR) being 0.63. The following additives are also added to the slurries in the proportions indicated in Table 1:
- a retardant in the form of an aqueous solution of PlastRetard^{®} from SICIT (comprising degraded polyamids, salified with calcium) diluted at 10 wt.% (PlastRetard^{®}),
- at least a plasticizer agent in the form of sodium polynaphthalenesulfonate (PNS),
- a heat resistant accelerator (HRA)
- starch

For examples E1 to E3 according to the invention, a mixture of two dispersing agent PNS and PCE (polycarboxylate ether) was used in the proportions reported in the table 1 below.

In the comparative example E4, only PNS was used as the dispersing agent. This comparative example is representative of a currently marketed plaster board having the same final weight and Air Volume Fraction (AVF).

For examples E1 to E3 the initial slurry was prepared as follows: In a first step, a powder comprising the HH beta, the starch and the HRA is slowly added in a solution of water comprising the plasticizer(s) and the retarder. The whole is mixed at low speed (200 rpm) during 30 s until complete wetting of the powder. Then, the mixture is blended at high speed 2500 rpm) for 45s so that all the HH (stucco) is entirely dispersed.

A foam composed of air, water and surfactant in the proportions given in the table 1 is added in the resulting slurry while stirring at low speed (250 rpm) with a rectangular blade for around 30s.

The surfactant is the Vinapor 3711 ^{®} product sold by BASF, comprising a mixture of sodium octyl sulfate, sodium decyl sulfate, sodium dodecyl sulfate and C₈-C₁₀(Ethylene Oxide₁₋₂₋₅)OSO₃Na

The foam is produced by a foam generator commercialized by TEC Systems. The foaming agent solution and air are introduced just before the mixing chamber composed of a rotor sandwiched between two stators (maze shape, gap ≈ 1 mm). The foam generator rotates at a frequency of between 12Hz and 50 Hz, the liquid flow is set between 100 and 200 mL/min with a peristaltic pump and the air flow is adjusted to produce a foam of around 90 g/L.

To ensure good homogenous mix of the foam into the slurry, the mixing is pursued during additional 10 s at low speed (250 rpm).

The resulting foamed slurry is placed between liners and dried at 180°C for 10 min. Finally, samples are left overnight at 40°C to make final dry gypsum boards.

**[Table 1]**

| | **E1** | **E2** | **E3** | **E4** |
|---|---|---|---|---|
| **Initial Slurry** | | | | |
| HH type | Beta | Beta | Beta | Beta |
| HH (g) | 610 | 610 | 610 | around 500 |
| WSR slurry | 0.63 | 0.63 | 0.63 | 0.82 |
| HRA (g) | 2.44 | 2.44 | 2.44 | 10 |
| Starch (g) | 12.2 | 12.2 | 12.2 | 5 |
| PlastRetard^{®} (g) | 3.05 | 3.05 | 3.05 | 0.05 |
| PNS (g) | 2.44 | 2.44 | 2.44 | 4 |
| PCE (g) | 7.94 | 7.94 | 7.94 | 0 |
| PNS/(PCE+PNS) | 0.24 | 0.24 | 0.24 | 1 |

| **Added foam** | | | | |
|---|---|---|---|---|
| Surfactant/ water amount | 1% | 1% | 1% | 0.45% |
| Air flow (L/min) | 2 | 2 | 2 | |
| Foam generator frequency | 12 | 20 | 50 | 50 |

| **Gypsum board** | | | | |
|---|---|---|---|---|
| Board weight (kg/m²) | 5.9 | 5.9 | 5.9 | 5.8 |
| Foaming agent flow (L/min) | 0.17 | 0.17 | 0.17 | 0 |
| Thickness (mm) | 12.5 | 12.5 | 12.5 | 12.5 |

Once manufactured, the gypsum boards of examples E1 and E4 were analysed through scanning electron microscope (SEM) and X-ray tomography and different features of the gypsum core structure were extracted and measured through image processing of the acquired X-ray tomographic 3D images.

Figure 2 is a SEM view of the gypsum board according to example 3.

Figure 3 is a 3-D raw image obtained by X-ray tomography of the gypsum board according to example 3.

Figure 4 is obtained starting from the raw image of the figure 2 and using the Avizo software ^{®} from Thermo Fisher Scientific. Avizo software allows better understanding of the materials structure by analysis and 3-D visualization of the imaging data of figure 2. Each pore is assimilated to a sphere of the same volume.

From this sphere, it is possible according to the invention to determine for each pore an equivalent diameter, the repartition in volume of the pores and a median equivalent diameter (by volume) for all the pores in the structure.

According to the invention, the equivalent diameter of a given pore is the diameter that a perfect sphere with the same volume as said pore would have.

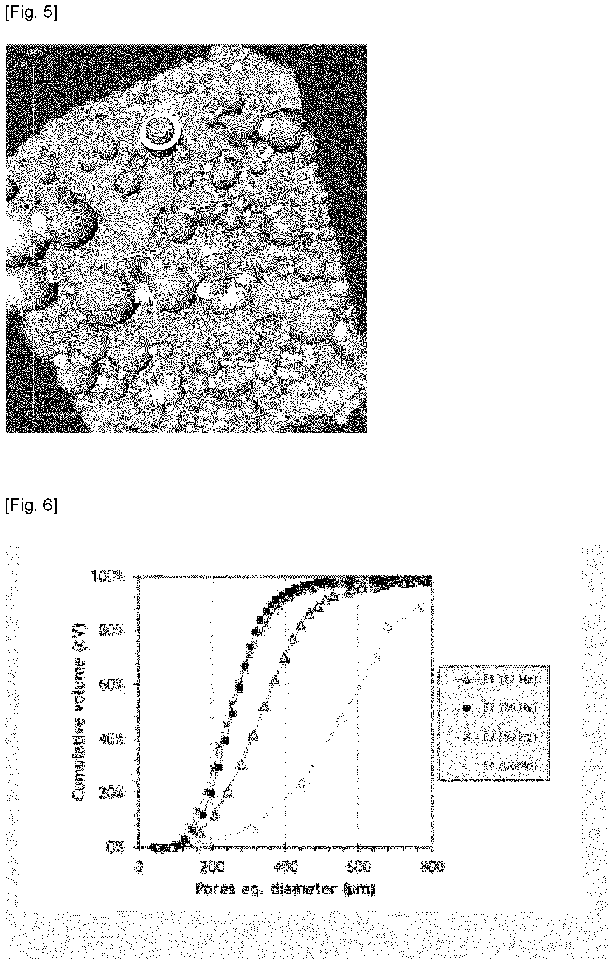

Figure 5 is a second image from the Avizo software where the connections between pores are visible. From these images, it is possible to determine the number of coordination of each connected air pores and finally the that is average neighbourhood (number of) coordination for the connected air pores of the material.

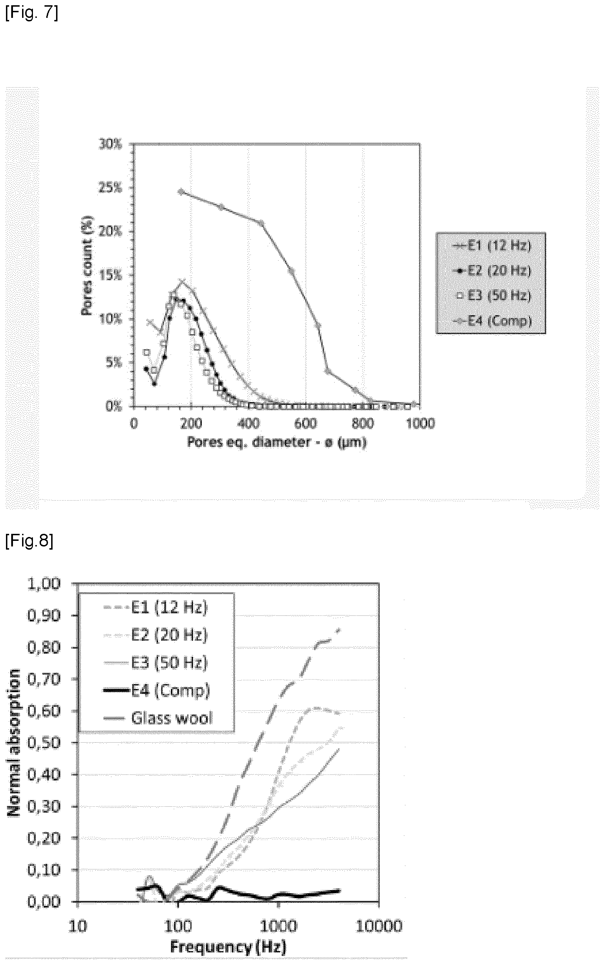

Thanks to the image analysis for each of the examples E1 to E4, the following features were extracted:
- the distribution, by occurrence, of the neighbourhood coordination, N, as a function of the equivalent diameter of the air pores;
- the cumulative volume (cV) of air pores as a function of the equivalent diameter of said air pores, as reported on Figure 6,
- the distribution, by occurrence, of the number of pores, as a function of the equivalent diameter of said air pores, as reported on Figure 7.

The air resistivity of each example is measured using a Mecanum's airflow resistivity meter (SIGMA) following the next protocol:
- Sample preparation: cut a 100 mm diameter disk from the gypsum-based material to be tested. Place it in the resistivity meter's sample holder, sealing the edges with PTFE films.
- Resistivity meter parameters: set air pressure to 40 mbar, indicate sample thickness (normally around 12mm), atmospheric pressure and temperature.
- Start measurement and retrieve data directly in Pa.s/m².

Values for acoustic absorbance should be between 1.10⁺⁴ and 2.10⁺⁶ Pa.s/m². The porosity was calculated from the measured weight of the gypsum boards. The mechanical strength of each example E1-E4 was measured in flexion and compression by the following protocol:
- Use the foamed slurry mixture to make 20x20x100 mm samples in silicone molds.
- after the gypsum slurry is set, demold and allow to dry for 48 hours in an oven at 40°C.
- leave at room temperature for at least 24 hours.
- On the tensile test bench, carry out the fracture measurement using the 3-point bending module at a distance of 60 mm with a descent speed of 2 mm/min. Knowing the cross-section of the bar, the breaking force is measured in Newtons and converted into flexural strength.
- On the tensile test bench, the half-bars obtained during breakage are placed between compression jaws and two 20x20 mm blocks. The maximum compression at 5 mm/min is noted after the first linear domain. Since the compression section is 20x20 mm, this force is converted into MPa.

Results of all the experiments are reported in Table 2 below:

**[Table 2]**

| | E1 | E2 | E3 | E4 |
|---|---|---|---|---|
| Average neighborhood coordination | 4.4 | 6.2 | 5.8 | 1.9 |
| Air Volume Fraction AVF (%) | 51 | 55 | 48 | 51 |
| Closed porosity (% of AVF) | 9.6 | 4.3 | 6.2 | 24.5 |
| Percentage of connected pores | 90.4 | 95.6 | 93.7 | 75.5 |
| Board weight (kg/m²) | 5.62 | 5.47 | 5.5 | 5.3 |
| Air resistivity(10⁵ Pa.S/m²) | 6.0 | 6.1 | 5.1 | 60 |
| Average pore equivalent diameter (cumulative air volume fraction; microns, see figure 6) | 340 | 255 | 246 | 560 |
| Population of larger pores: maximum of the peak (by number; micrometers) | 163 | 145 | 125 | mono-modal |
| Population of larger pores: maximum of the peak (by number; micrometers) | <60 | <60 | <60 | mono modal |
| Strength in compression (MPa) | 1.18 | 1.60 | 1.31 | 1.69 |
| Strength in flexion (MPa) | 0.26 | 0.23 | 0.25 | 0.45 |

Closed porosity means that the neighbourhood coordination of the pore studied is equal to zero (see figure 1). A connected pore is a pore which its neighbourhood coordination number is at least 1. The results reported in Table 2 above show that the gypsum boards according to the invention (examples E1 to E3) have a very different porosity to that of the reference gypsum board (example 4). In particular, the plates according to the invention exhibit a bimodal, pore distribution, with a first category of larger pores, whose diameter is greater than 100 micrometers, and a second category of smaller pores, whose diameter is less than 80 micrometers, and more particularly less than 60 micrometers, as is visible on the attached figure 7.

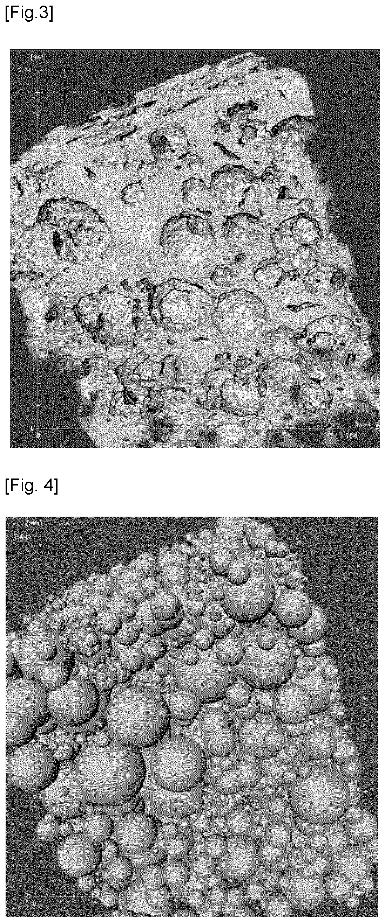

This multimodal porosity structure is also visible in the tomography images shown in Figures 2 to 4. In addition, analysis of the images shows that virtually all the pores are interconnected with one another, each pore being connected on average to at least 4 to more than 6 neighbouring pores via throats or voids (as called average neighbourhood coordination). The majority of pores in the first category are connected to pores in the second category.

The air resistance measurements also show the permeability of the plate due to this interconnection between pores, for the examples according to the invention E1 to E3. Comparative example E4, on the other hand, has a high level of closed porosity (i.e. no interconnection between pores) and consequently a much lower air permeability.

The results reported in Table 2 also show that the mechanical strengths of the gypsum boards are roughly of the same order for all examples and perfectly acceptable for use as insulation material.

Additionally, the acoustic performance of the gypsum boards in examples E1 to E4 was compared with that of a reference glass wool board which was 30 mm thick and had a density of 3 kg/m², according to a frequency range from 60 to 6000Hz.

The acoustic absorbing measurements using the Kundt's tube test using 4 cm and 10 cm diameter samples. The measures permit to access to the sound energy absorption coefficient (α₀).

The results are reported in the Figure 8 below : the gypsum board according to examples E1 to E3 shows acoustic damping slightly lower but comparable with that of the reference glass wool board. On the contrary, the example E4 with a closed porosity exhibit no absorption of the sound, whatever be its frequency.

The results shown in figure 8 demonstrate the superior soundproofing properties of gypsum boards with multimodal porosity according to the invention.

## Claims

1. A gypsum board comprising a gypsum core disposed between two cover sheets;
wherein said gypsum core comprises a gypsum crystal matrix and air pores;
wherein at least 80%, preferably at least 90%, of air pores are connected, either by a throat or a hole;
wherein the average neighbourhood coordination of said connected air pores is between 2 and 10, preferably between 4 and 8,
wherein the distribution of the air pores diameter is multimodal.

2. A gypsum board according to claim 1 wherein the distribution of the air pores diameter is bimodal.

3. A gypsum board according to claim 1 or 2 wherein the distribution by number of the air pores diameter comprises at least a first peak whose maximum lies within a pore diameter range of between 1 and 80 micrometers and a second peak whose maximum lies within a pore diameter range higher than 100 micrometers.

4. A gypsum board according to any of the preceding claims, wherein the average pore equivalent diameter, as a function of the cumulative air volume fraction, is higher than 200 nm and lower than 500 nm.

5. A gypsum board according to any of the preceding claims, wherein the cumulated volume proportion of the connected air pores is more than 40% and less than 65%, preferably less than 60%, of the overall gypsum core volume.

6. A gypsum board according to any of the preceding claims, wherein the larger air pores are connected by the smaller air pores through said throat or hole.

7. A gypsum board according to any of the preceding claims, wherein the core further comprises reinforcing fibers throughout the gypsum crystal matrix.

8. A process for manufacturing a gypsum board according to any of claims 1 to 7, wherein said process comprises the following steps:
- forming a gypsum slurry of alpha-gypsum hemihydrate or beta-gypsum hemihydrate by mixing said gypsum slurry with water and additives, said additives comprising a mixture of plasticizers, a retarder, starch;
- blending of the slurry until the gypsum hemihydrate is dispersed,
- producing a foam comprising air, water and a surfactant
- adding the foam to the blended slurry,
- placing the resulting foamed slurry between liners to make said gypsum board
wherein the mixture of plasticisers comprises a polynaphtalene sulfonate (PNS) and a polycarboxylate (PCE) in a weight ratio PNS/(PNS+PCE) between comprised between 20 and 30%.

9. A process according to claim 8, wherein the surfactant is chosen from alkyl sulfate (AS), alkyl ether sulfate (AES) and their mixture.

10. A process according to claim 8 or 9, wherein the density of the foam is between 80 g/L and 100 g/L.

11. A process according to claim 8 to 10, wherein the frequency of the foam generator of the foam comprising air, water and a surfactant is from 10 to 50 Hz.

12. A process according to claim 8 to 11, wherein the water to stucco ratio of the gypsum slurry is between 0,4 and 0,8, preferably between 0,5 and 0,7.

13. A process according to claim 8 to 12, wherein the additives comprise also a accelerator and/or a retarder.

14. A process according to claim 8 to 13, wherein the additives are present according to the following amount, the percentage being given by reference to the weight of the gypsum slurry :
- Surfactant (total amount) : between 0.5 and 1%
- Plasticizers (total amount) : between 1 and 3%
- Starch : between 1 and 3%
- Accelerator between 0 and 2%
- Retarder : between 0 and 0.1%
